# EUROPEAN PATENT SPECIFICATION

(11) **EP 3 432 067 B1**
(45) Date of publication and mention of the grant of the patent: **03.11.2021**
(21) Application number: 18187468.6
(22) Date of filing: 03.07.2012
(51) Int. Cl.: G03B 21/20, G03B 33/08, H04N 9/31

(54) **PROJECTION DEVICE AND CONTROL METHOD THEREOF**
PROJEKTIONSVORRICHTUNG UND STEUERUNGSVERFAHREN DAFÜR
DISPOSITIF DE PROJECTION ET SON PROCÉDÉ DE COMMANDE

(30) Priority: 28.11.2011 CN 201110385139
(43) Date of publication of application: 23.01.2019
(62) Divisional of application: 12853696.8
(73) Proprietor: Appotronics Corporation Limited, Shenzhen (CN)
(72) Inventor: HU, Fei, Shenzhen (CN); LI, Yi, Shenzhen (CN); YANG, Yi, Shenzhen (CN); CAO, Liangliang, Shenzhen (CN)
(74) Representative: Hoffmann Eitle

(56) References cited:
- WO-A1-2010/125866
- JP-A- 2005 025 107
- JP-A- 2011 191 602
- US-A1- 2006 087 847
- US-A1- 2009 284 148

## Description

### BACKGROUND OF THE INVENTION

### Field of the Invention

The present invention relates to a field of projection. More particularly, the present invention relates to a projection apparatus and control method for it.

### Description of the Related Art

In conventional projection display systems, usually at least two solid state light source (SSLS for short) such as LDs (laser diode) or LEDs (light emitting diode) are used to generate at least two primary color light beams of different colors directly or indirectly. However, in these projection systems, the power of each SSLS is constant. So even in the situation that at least two beams of primary color light need to be output alternately, each SSLS is still in a working state. The output of at least two beams of primary color light alternately is achieved by light filtering using a light filter wheel, which leads to a high energy consumption of the projection apparatus.

In sum, a projection apparatus and control method for it are needed to solve the problem of high energy consumption caused by each of the SSLS of the projection apparatus keeping in working state in existing technology.

An example of the prior art can be found in document JP 2011 191 602 A.

### SUMMARY OF THE INVENTION

An object of the present invention is to provide a projection apparatus and control method for it to reduce the energy consumption of the projection apparatus.

To solve the problem above, the present invention provides a projection apparatus according to claim 1, which includes: at least two solid state light sources, a sync signal generator and a controller. The at least two solid state light sources are used for generating at least two light beams directly or indirectly, with the at least two light beams having different colors and being output alternately; the sync signal generator is used for generating a sync signal; and the controller is used for supplying a drive power in pulse manner based on the sync signal to control the work power of each of the at least two solid state light sources, wherein during at least one sub-period, one of the at least two solid state light sources is in a normal working status and another one of the at least two solid state light sources is in a standby status.

In one aspect, the at least two solid state light sources comprise a first solid state light source for generating an excitation light, the projection apparatus further comprises a wavelength conversion device, a first color wheel and a first drive mechanism. The wavelength conversion device is used for converting the excitation light to a converted light; The first color wheel comprises a first segment and a second segment, the converted light is incident on the first color wheel; The first drive mechanism for driving the first color wheel to rotate, wherein the first segment and the second segment are alternatingly disposed in a path of the converted light, so that the converted light is filtered by the first segment to generate a first primary color light and is filtered by the second segment to generate a second primary color light.

In another aspect, the wavelength conversion device comprises a second color wheel carrying a wavelength conversion material and a second drive mechanism; The second drive mechanism is used to drive the second wheel to rotate, wherein the spot on the second wheel formed by the excitation light illuminates the wavelength conversion material along a predetermined path, and the wavelength conversion material converts the excitation light into the converted light.

The at least two solid state light sources comprises a second solid state light source for generating a third primary color light, the projection apparatus further comprises a light combining device combining the first, the second and the third primary color light into a combined light, wherein the first color wheel further comprises a third segment, and by the driving of the first drive mechanism, the first, second and third segments are alternatingly disposed in a path of the converted light.

In another aspect, the sync signal generator detects a moving position of the first color wheel to generate the sync signal.

In another aspect, the controller supplies a first power to the first solid state light source when the first segment is in the path of the converted light, supplies a second power to the first solid state light source when the second segment is in the path of the converted light, and supplies a low power to the first solid state light source when the third segment is in the path of the converted light, the low power being lower than the first and second power.

In another aspect, the first solid state light source is turned off or the low power to the first solid state light source is adjusted, in order to keep the first solid state light source in a standby state when the third segment is in the path of the converted light.

In another aspect, the controller supplies a third power to the second solid state light source when the third segment is in the path of the converted light, and supplies a low power to the second solid state light source when the first or second segments is in the path of the converted light, the low power being lower than the third power.

In another aspect, the second solid state light source is turned off or the low power to the second solid state light source is adjusted, in order to keep the second solid state light source in a standby state when the first or second segment is in the path of the converted light.

To solve the problem above, the present invention also provides a method for controlling the projection apparatus according to claim 9, comprising:
(a) directly or indirectly generating at least two primary color lights of different colors and output alternately using at least two solid state light sources;
(b) generating a sync signal using a sync signal generator; and
(c) using a controller to control the drive power in pulse manner of the at least two solid state light sources based on the sync signal, so that during at least some sub-period, at least one solid state light source is in a normal working status and at least one solid state light source is in an inactive status.

In another aspect, step (a) includes: using a first solid state light source of the at least two solid state light sources to generate an excitation light; using a wavelength conversion device to convert the excitation light into a converted light; using a first drive mechanism to drive a first color wheel to rotate, the color wheel having a first and a second segment, the first and second segment alternatingly disposed in a path of the converted light, so that the converted light is filtered by the first segment to generate a first primary color light and is filtered by the second segment to generate a second primary color light.

Step (a) further includes: using a second solid state light source of the at least two solid state light source to generate a third primary color light; using a light combing device to combine the first, second the third primary color light into the combined light, using a drive mechanism to drive the first color wheel further having a third segment, so that the first, second and third segments are disposed in a path of the converted light alternatingly.

In another aspect, wherein step (c) includes: using controller to supply a first power to the first solid state light source when the first segment is in the path of the converted light, to supply a second power to the first solid state light source when the second segment is in the path of the converted light, to supply a low power to the first solid state light source when the third segment is in the path of the converted light, the low power being lower than the first and second power. Furtherly, the controller is used to supply a third power to the second solid state light source when the third segment is in the path of the converted light, and to supply another low power to the second solid state light source when the first and second segments are in the path of the converted light, the other low power being lower than the third power.

The advantage of present invention is: different from prior art, the projection apparatus and control method of present invention can reduce energy consumption under the condition that the projection apparatus works normally by a control based on the sync signal, the control makes one of the at least two solid state light sources is in a normal working status and another one of the at least two solid state light sources is kept in an inactive status during at least one sub-period.

### BRIEF DESCRIPTION OF THE DRAWINGS

Fig. 1 schematically illustrates an example of a projection apparatus not part of the invention .
Fig. 2 schematically illustrates a first color wheel used in the projection apparatus shown in Fig. 1.
Fig. 3 shows an example of the brightness of the primary color light when applying the first color wheel shown in Fig. 2.
Figs. 4 shows work power for the first solid state light source when applying the first color wheel shown in Fig.2.
Figs. 5 shows work power for the second solid state light source when applying the first color wheel shown in Fig.2.
Fig. 6 shows another first color wheel of the projection apparatus shown in Fig.1.
Fig. 7 shows an example of the brightness of primary color light when applying the color wheel shown in Fig. 6.
Figs. 8 shows work power for the first solid state light source when applying the first color wheel shown in Fig.6.
Figs. 9 shows work power for the second solid state light source when applying the first color wheel shown in Fig.6.
Fig. 10 schematically illustrates an embodiment of present projection apparatus.
Fig. 11 schematically illustrates a control method for projection apparatus of present invention.

### DETAILED DESCRIPTION OF AN EXAMPLE AND

### THE PREFERRED EMBODIMENT

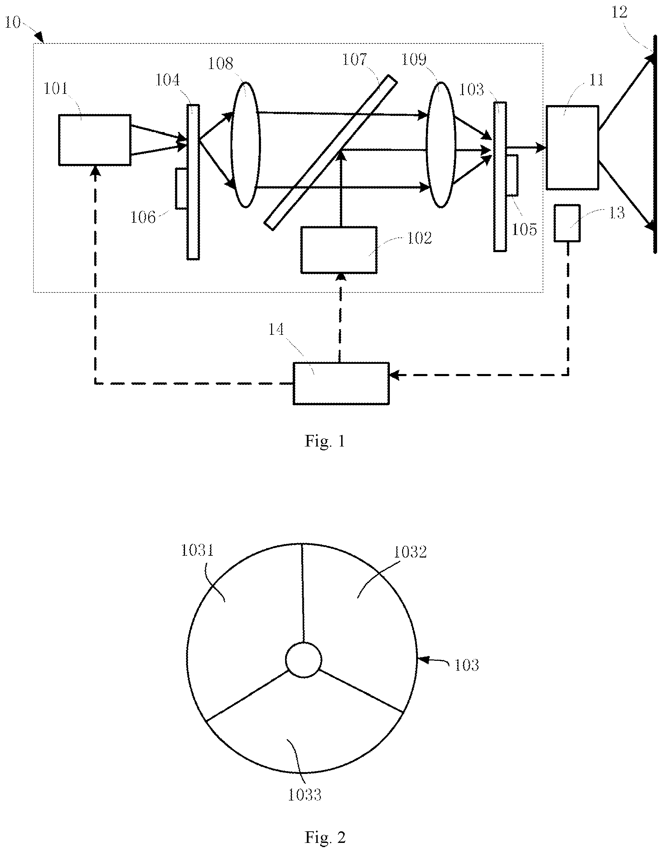

Referring to Fig.1, Fig.1 shows a schematical structure of projection apparatus in an example not part of the invention.

As shown in Fig.1, the projection apparatus in present example mainly comprises a light source system 10, a light modulating system 11, a screen 12, a sync signal generator 13 and a controller 14. In this example, the light source system 10 comprises a first SSLS 101, a second SSLS 102, a first color wheel 103, a second color wheel 104, a first drive mechanism 105, a second drive mechanism 106, light combining device 107 and light collecting device 108 and 109. The first SSLS 101 is used to generate an excitation light, and the excitation light is incident onto the second color wheel 104. A wavelength conversion material (not shown in figure) is set on the second color wheel 104 and converts the excitation light into a converted light. The second drive mechanism 106 drives the second color wheel 104 to make the light spot formed on the second color wheel 104 by the excitation light generated by the first SSLS 101 illuminate the wavelength conversion material along a predetermined path, which can avoid overheat caused by the light spot on the second color wheel 104 formed by the excitation light illuminating the same position of the wavelength conversion material for a long time. In another example, the second color wheel 104 and the second drive mechanism 106 can be replaced by other wavelength conversion devices, such as a light emitting device which is mixed with some proper wavelength conversion material in its packaging material.

The converted light output from the second color wheel 104 is collected by a light collecting device 108, then illuminates on and pass through the light combining device 107, at last is collected by light collecting device 109 and illuminates on the first color wheel 103. In this example, light collecting device 108 and 109 is lens or other proper optical element. As shown in Fig.2, the first color wheel 103 has a first segment 1031, a second segment 1032 and a third segment 1033. The converted light will become a first primary color light when is filtered by the first segment 1031, and become a second primary color light when is filtered by a second segment 1032.

A second SSLS 102 generates a third primary color light. The third primary color light generated by the second SSLS 102 is reflected by the light combining device 107 and then combined with the converted light generated by the second color wheel 104. In this example, light combining device 107 is a light splitting filter or other proper optical element. The converted light and the third primary color light are combined by the light combining device 107 and then are incident onto the first color wheel 103.

A first drive mechanism 105 drives the first color wheel 103 to rotate, in order to make the first segment 1031; the second segment 1032 and the third segment 1033 are disposed in the path of the converted light and the third primary color light alternately. The first segment 1031 filters the incident converted light and the third primary color light, and let a first primary color light pass through; The second segment 1032 filters the incident converted light and the third primary color light, and let a second primary color light pass through; The third segment 1033 filters only let a third primary color light pass through when the converted light and the third primary color light are incident on it. Therefore, the first color wheel 103 outputs the first, second and third primary color light of different color alternately. A scattering material or scattering microstructure may be positioned on the third segment 1033, for scattering the third primary color light to achieve decoherence for it. The first, second and third primary color light are modulated by the light modulation system 11 and then are projected on the screen 12.

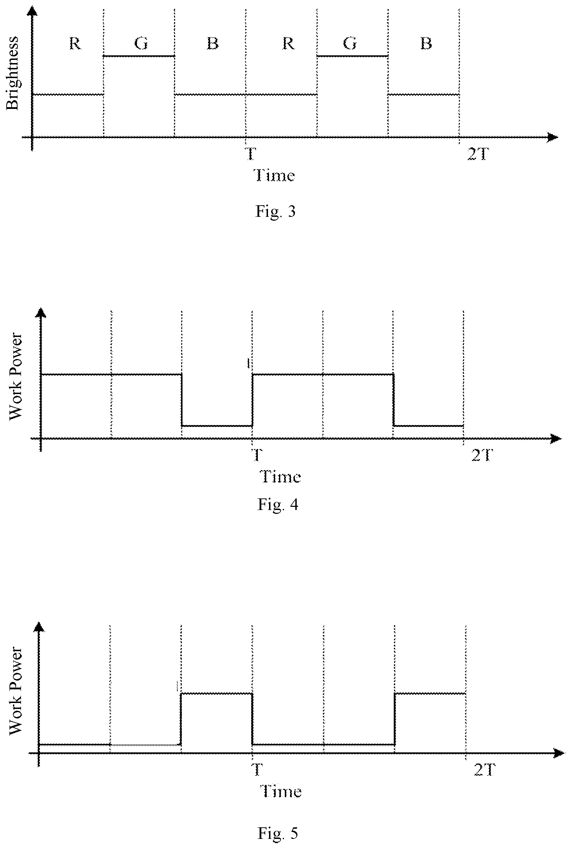

In present example, the first SSLS 101 is laser diode or light emitting diode emitting blue light, UV light or near UV light. The second SSLS 102 is blue light laser diode or light emitting diode. The wavelength conversion material on the second color wheel 104 is yellow phosphor which converts the excitation light generated by the first SSLS 101 to yellow light. The first segment 1031, the second segment 1032 and the third segment 1033 on the first color wheel 103 are red light filtering segment, green light filtering segment and blue light transmitting segment, wherein the first segment 1031 filters the incident yellow light and blue light and outputs red light, the second segment 1032 filters the incident yellow light and blue light and outputs green light, the third segment 1033 transmits the blue light only when receives the incident yellow light and blue light. Therefore, the first color wheel 103 generates three primary color lights which are red light, green light and blue light (RGB) alternately. In a common display process, the brightness of red light R, green light G and blue light B is shown in Fig. 3. In other embodiment, the light source system 10 mentioned above can generates three primary color lights of other colors.

The sync signal generator 13 detects the moving position of the first color wheel 103 to generate a sync signal. More particularly, the sync signal generator 13 can detect a special label on the first color wheel 103, and generate a sync pulse at each time when detects the label. In other embodiment, the sync signal generator 13 can generate sync signal by other means, such as by detecting a brightness of a special primary color light.

As shown in Fig.4 and Fig.5, the controller 14 determines the time when the first, second and third segment 1031, 1032,1033 are disposed in the light path of the converted light and the third primary color light according to the sync signal. The controller 14 supplies a first power to the first SSLS 101 when the first segment is in the path of the converted light and the third primary color light, supplies a second power to the first SSLS 101 when the second segment is in the path of the converted light and the third primary color light, by this way, the first SSLS 101 is in a normal working status. The controller 14 further supplies a third power to the second SSLS 102 when the third segment is in the path of the converted light and the third primary color light, by this way, the second SSLS 102 is in a normal working status. Therefore, the first, second and third primary color light can be adjusted to a necessary brightness to satisfy the requirement of projecting display. As shown in Fig.4, the first power and the second power reveal the same, but in practical, the first, second and third power can be adjusted randomly based on the required brightness for each of the primary color light.

Furtherly, in present example, the controller 14 supplies a low power to the second SSLS 102 when the first segment 1031 or the second segment 1032 is disposed in the path of the converted light and the third primary color light, the low power being lower than the third power. By this way, the second SSLS 102 is in an inactive status. And the controller 14 supplies another low power to the first SSLS 101 when the third segment 1033 is in the path of the converted light and the third primary color light, said another low power being lower than the first and the second power. By this way, the first SSLS 101 is in an inactive status.

In a preferable embodiment, the controller14 turns off or adjusts the power of the second SSL 102 when the first segment 1031 or the second segment 1032 is disposed in the path of the converted light and the third primary color light, to make the second SSLS 102 keep in a warm-up status; and the controller 14 turns off or adjusts the power of the first SSL 101 when the third segment 1033 is disposed in the path of the converted light and the third primary color light, to make the first SSLS 101 keep in a warm-up status. When the first and second SSLS 101, 102 are in the warm-up status, they can be kept in a predetermined temperature, which help them to come into a normal working status more quickly, which reduces the time of status shifting.

By the ways mentioned above, since the controller 14 control the work power in a pulse manner of the first SSLS 101 and the second SSLS 102 to make them to shift between normal working status and inactive status alternately, which reduces energy consumption of projection apparatus on the condition that the projection apparatus works well.

Moreover, since the first SSLS 101 and the second SSLS 102 work in pulse manner which can reduce heat generated by the first and second SSLSs, they can output light with much higher brightness when driven by a higher work power. In another words, when output the same brightness, the amount of the first SSLS 101 and the second SSLS 02 can be reduced to lower the cost of whole system.

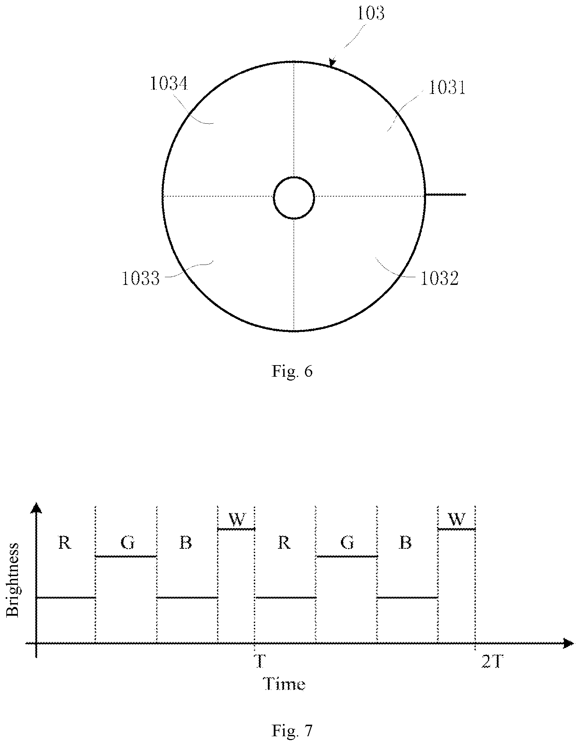

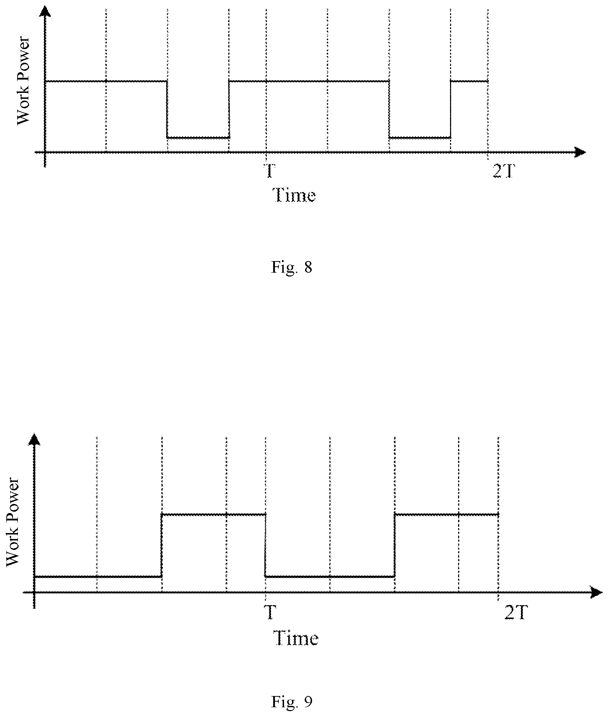

Fig. 6 shows a first color wheel 103 having a forth segment 1034 expect for a first segment 1031, a second segment 1032 and a third segment 1033. A first drive mechanism 105 drives the first color wheel 103 to rotate, in order to dispose the first segment 1031, the second segment 1032, the third segment 1033 and the forth segment 1034 alternately in the path of the combined light of the converted light and the third primary color light which are combined by light combining device 107. The converted light and the third primary color light pass through the forth segment 1034 and be output as white light. In a normal display process, the brightness of red light R, green light G, blue light B and white light W are shown as Fig.7. Meanwhile, as shown in Fig.8 and Fig.9, when the forth segment 1034 of the first color wheel 103 is disposed in the path of the converted light and the third primary color light, the controller 14 controls the first SSLS 101 and the second SSLS 102 to be in normal working status simultaneously, thus the first color wheel 103 will output white color to the light modulation system 11, which achieves a purpose of enhancing white light. Moreover, duty cycles of the first SSLS 101 and the second SSLS 102 are increased, and utilization ratio are increased too.

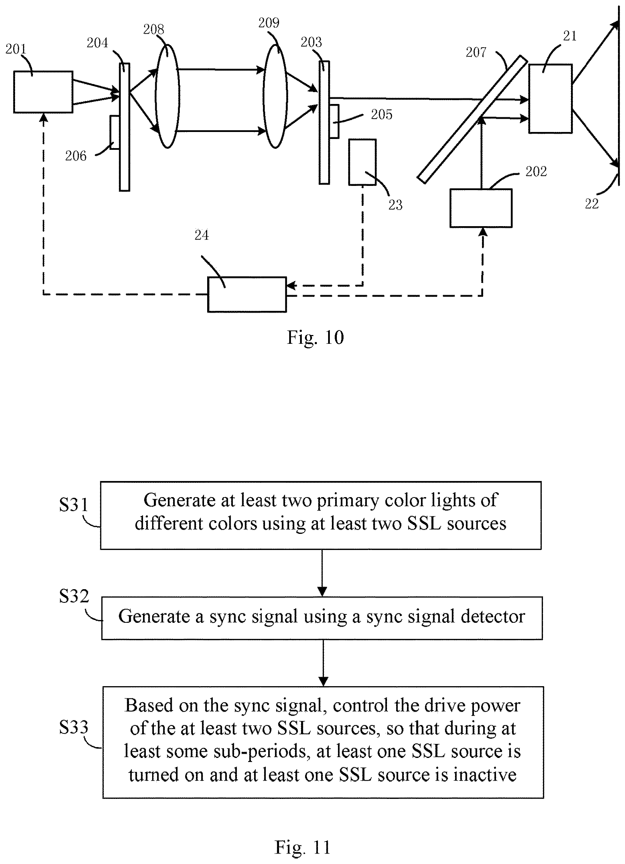

Referring to Fig 10, Fig. 10 illustrates a projection apparatus according to an embodiment of the present invention. As shown in Fig.10, the projection apparatus of this embodiment mainly comprises a light source system, a light modulating system 21, a screen 22, a sync signal generator 23 and a controller 24.

In this embodiment, the light source system comprises a first SSLS 201, a second SSLS 202, a first color wheel 203, a second color wheel 204, a first drive mechanism 205, a second drive mechanism 206, light combining device 207 and light collecting device 208 and 209. A difference between present projection apparatus in this embodiment and that of the example shown in Fig.1 is that the second SSLS 202 and light combining device 207 are located downstream from the first color wheel 203. Therefore, through the light combining device 207, a third primary color light generated by the second SSLS 202 is combined with a light path of a first primary color light and a second primary color light generated by the first color wheel 203.

In this embodiment, the first color wheel 203 also has a first segment, a second segment and a third segment, and they are driven by a first drive mechanism 205 to disposed alternately in the light path of the converted light generated by the second color wheel 204. The converted light generated by the second color wheel 204 becomes a first primary color light after filtered by the first segment, and becomes a second primary color light after filtered by the second segment.

The controller 24 determines the time when the first, second and third segment are disposed in the light path of the converted light according to the sync signal generated by the sync signal generator 23. The controller 24 supplies a first power to the first SSLS 201 when the first segment is in the path of the converted light, supplies a second power to the first SSLS 201 when the second segment is in the path of the converted light, and supplies a low power to the first SSLS 201 when the third segment is in the path of the converted light, the low power being lower than the first and second power. Furtherly, the controller 24 supplies a third power to the second SSLS 202 when the third segment is in the path of the converted light, and supplies another low power to the second SSLS 202 when the first and second segments are in the path of the converted light, said another low power being lower than the third power.

Since the third primary color light generated by the second SSLS 202 is incident on the light modulation system 21 directly, when the first or second segment is disposed in the path of the converted light, the work power of the second SSLS 202 is adjusted to a degree that the third primary color light generated by the second SSLS 202 won't bring any effect to the first and second primary color light, such as interference brought to the first and second primary color light by the third primary color light won't be perceived by human eyes.

The controller adjusts the power of the second SSLS 202 when the first or second segment is disposed in the path of the converted light, in order to keep the second SSLS 202 in a warm-up (standby) status; And when the third segment is disposed in the path of the converted light, the controller 24 turns off or adjusts the power of the first SSLS 201, in order to keep the first SSLS 201 in a warm-up (standby) status.

By this way mentioned above, the first SSLS 201 and the second SSLS 202 are in normal work status and inactive status alternately by controlling the work power to the first and second SSLS provided by the controller in pulse manner. Therefore, energy consumption of the projection apparatus can be reduced on the condition that the projection apparatus can work normally.

Moreover, since the first SSLS 201 and the second SSLS 202 work in pulse manner which can reduce heat generated by the first and second SSLSs 201, 202, they can output light with much higher brightness when driven by a higher work power. In another words, when outputting the same brightness, the amount of the first SSLS 201 and the second SSLS 202 can be reduced to lower the cost of whole system.

Furtherly, except for the projection apparatus described in the first example and the embodiment, the sync signal generator and the controller can also be used in other projection apparatuses which comprise at least two SSLS and uses them to directly or indirectly generate at least two primary color lights of different colors alternately. Meanwhile, the controller control the work power of the at least two SSLSs in a pulse manner based on the sync signal, in order to achieve that during at least some sub-periods, at least one of the at least two SSLSs is in normal working status and one of the at least two SSLSs is inactive status. By this way, energy consumption of the projection apparatus is reduced.

Referring to Fig.11, Fig.11 is a schematic figure of a control method for a projection apparatus in present invention. As shown in Fig.11, the control method in this embodiment comprises steps as followed:
In step S31, at least two SSLSs directly or indirectly output at least two beams of primary color light of different colors alternately. This step can be achieved according to the way described in the example and the embodiment mentioned above, or according to other ways disclosed in common knowledge of this field, thus won't be described in detail thereafter.

In step S32, the sync signal generator is applied to generate sync signal. In this step, the sync signal can be generated by detecting the moving position of the color wheel which is used to generate primary color light.

In step S33, the controller is used to control the work power of the at least two SSLSs in a pulse manner based on the sync signal, in order to achieve that during at least some sub-periods, at least one of the at least two SSLSs is in working status and one of the at least two SSLSs is inactive status. This step can be achieved by the way described in the example and the embodiment mentioned above, thus won't be described in detail thereafter.

The projection apparatus and control method in present invention can reduce energy consumption under the condition that the projection apparatus works normally by a control based on the sync signal, the control makes one of the at least two SSLSs is in working status and another one of the at least two SSLSs is kept in an inactive status during at least one sub-period.

It's understandable that the control of power may be achieved by many kinds of ways, like changing the current or voltage, or changing a ratio (duty cycle) of the pulse width to the whole pulse width of the drive signal. All of these are common knowledge which won't be described in details.

While the foregoing written description of the invention enables one of ordinary skill to make and use what is considered presently to be the best mode thereof, those of ordinary skill will understand and appreciate the existence of variations, combinations, and equivalents of the specific embodiment, method, and examples herein. The invention should therefore not be limited by the above described embodiment, method, and examples, but is defined by the claims.

## Claims

1. A projection apparatus comprising:
at least two solid state light sources (201, 202) for generating at least two light beams directly or indirectly, with the at least two light beams having different colors and being output alternately, the at least two solid state light sources comprise a first solid state light source (201) for generating an excitation light, a second solid state light source (202) for generating a third primary color light
a wavelength conversion device for converting the excitation light to a converted light;
a first color wheel (203) disposed to receive the incident converted light, the first color wheel (203) comprising a first segment and a second segment;
a first drive mechanism (205) for driving the first color wheel (203) to rotate, wherein the first segment and the second segment are alternatingly disposed in a path of the converted light, so that the converted light is filtered by the first segment to generate a first primary color light and is filtered by the second segment to generate a second primary color light;
a light combing device (207) combining the first, the second and the third primary color light into the combined light;
a sync signal generator (23) for generating a sync signal; and
a controller (24) for supplying a drive power in pulse manner to each of the at least two solid state light sources (201, 202) based on the sync signal,
**characterized in that** during at least one sub-period, one of the at least two solid state light sources (201, 202) is in working status and another one of the at least two solid state light sources is kept in a standby status.

2. The projection apparatus of claim 1, wherein the wavelength conversion device comprises:
a second color wheel (204) carrying a wavelength conversion material; and
a second drive mechanism (206) to drive the second wheel (204) to rotate, wherein a light spot on the second wheel (204) formed by the excitation light illuminates the wavelength conversion material along a predetermined path, and the wavelength conversion material converts the excitation light into the converted light.

3. The projection apparatus of claim 2,
wherein the first color wheel (203) further comprises a third segment, the first, second and third segments are alternatingly disposed in a path of the converted light.

4. The projection apparatus of claim 3, wherein the sync signal generator (23) detects a moving position of the first color wheel (203) to generate the sync signal.

5. The projection apparatus of claim 3, wherein the controller (24) supplies a first power to the first solid state light source (201) when the first segment is in the path of the converted light, supplies a second power to the first solid state light source (201) when the second segment is in the path of the converted light, and supplies a low power to the first solid state light source (201) when the third segment is in the path of the converted light, the low power being lower than the first and second power.

6. The projection apparatus of claim 5, wherein the low power turns off the first solid state light source (201) or adjusts the power of the first solid state light source (201) to keep it in a standby state when the third segment is in the path of the converted light.

7. The projection apparatus of claim 3, wherein the controller (24) supplies a third power to the second solid state light source (202) when the third segment is in the path of the converted light, and supplies a low power to the second solid state light source (202) when the first and second segments are in the path of the converted light, the low power being lower than the third power.

8. The projection apparatus of claim 7, wherein the controller (24) turns off the second solid state light source (202) or adjusts the power of the second solid state light source (202) to keep it in a standby state when the first or second segment is in the path of the converted light.

9. A method for controlling a projection apparatus, comprising:
(a) directly or indirectly generating at least two primary color lights of different colors and output alternately using at least two solid state light sources;
wherein step (a) includes:
using a first solid state light source (201) of the at least two solid state light sources to generate an excitation light;
using a wavelength conversion device to convert the excitation light into a converted light;
using a first drive mechanism (205) to drive a first color wheel (203) to rotate, the first color wheel (203) having a first and a second segment, so that the first and second segment alternatingly disposed in a path of the converted light when the first color wheel (203) rotates, then the converted light is filtered by the first segment to generate a first primary color light and is filtered by the second segment to generate a second primary color light;
using a second solid state light source (202) of the at least two solid state light source to generate a third primary color light;
using a light combing device (207) to combine the first, second and the third primary color light into the combined light;
(b) generating a sync signal using a sync signal detector; and
(c) using a controller (24) to control the drive power in pulse manner of the at least two solid state light sources based on the sync signal, so that during at least some sub-period, at least one solid state light source is in working status and at least one solid state light source is in a standby status.

10. The method of claim 9, wherein step (a) further includes:
using a drive mechanism to drive the first color wheel (203) further having a third segment, so that the first, second and third segments are alternatingly disposed in a path of the converted light.

11. The method of claim 10, wherein step (c) includes:
using the controller (24) to supply a first power to the first solid state light source (201) when the first segment is in the path of the converted light, to supply a second power to the first solid state light source (201) when the second segment is in the path of the converted light, to supply a low power to the first solid state light source (201) when the third segment is in the path of the converted light, the low power being lower than the first and second power, to supply a third power to the second solid state light source (202) when the third segment is in the path of the converted light, and to supply another low power to the second solid state light source (202) when the first and second segments are in the path of the converted light, said another low power being lower than the third power.

## Patentansprüche

1. Projektionseinrichtung, umfassend:
mindestens zwei Festkörper-Lichtquellen (201, 202) zum direkten oder indirekten Erzeugen von mindestens zwei Lichtstrahlenbündeln, wobei die mindestens zwei Lichtstrahlenbündel unterschiedliche Farben aufweisen und abwechselnd ausgegeben werden, wobei die mindestens zwei Festkörper-Lichtquellen eine erste Festkörper-Lichtquelle (201) zum Erzeugen eines Anregungslichts, eine zweite Festkörper-Lichtquelle (202) zum Erzeugen eines dritten Primärfarbenlichts umfassen,
eine Wellenlängenkonvertierungsvorrichtung zum Konvertieren des Anregungslichts in ein konvertiertes Licht;
ein erstes Farbrad (203), das angeordnet ist, um das einfallende konvertierte Licht zu empfangen, wobei das erste Farbrad (203) ein erstes Segment und ein zweites Segment umfasst;
einen ersten Antriebsmechanismus (205), um das erste Farbrad (203) zum Drehen anzutreiben, wobei das erste Segment und das zweite Segment abwechselnd in einem Pfad des konvertierten Lichts angeordnet werden, sodass das konvertierte Licht durch das erste Segment gefiltert wird, um ein erstes Primärfarbenlicht zu erzeugen, und durch das zweite Segment gefiltert wird, um ein zweites Primärfarbenlicht zu erzeugen;
eine Lichtkombinationsvorrichtung (207), die das erste, das zweite und das dritte Primärfarbenlicht zu dem kombinierten Licht kombiniert;
einen Synchronisationssignalerzeuger (23) zum Erzeugen eines Synchronisationssignals; und
eine Steuereinheit (24), um jeder von den mindestens zwei Festkörper-Lichtquellen (201, 202) basierend auf dem Synchronisationssignal eine Antriebsenergie auf gepulste Weise zuzuführen,
**dadurch gekennzeichnet, dass** sich während mindestens einer Teilperiode eine von den mindestens zwei Festkörper-Lichtquellen (201, 202) im Arbeitsstatus befindet und eine andere von den mindestens zwei Festkörper-Lichtquellen in einem Bereitschaftsstatus gehalten wird.

2. Projektionseinrichtung nach Anspruch 1, wobei die Wellenlängenkonvertierungsvorrichtung umfasst:
ein zweites Farbrad (204), das ein Wellenlängenkonvertierungsmaterial trägt; und
einen zweiten Antriebsmechanismus (206), um das zweite Rad (204) zum Drehen anzutreiben, wobei ein Lichtfleck auf dem zweiten Rad (204), der durch das Anregungslicht gebildet wird, das Wellenlängenkonvertierungsmaterial entlang eines vorgegebenen Pfads beleuchtet und das Wellenlängenkonvertierungsmaterial das Anregungslicht in das konvertierte Licht konvertiert.

3. Projektionseinrichtung nach Anspruch 2,
wobei das erste Farbrad (203) weiter ein drittes Segment einschließt, wobei das erste, zweite und dritte Segment abwechselnd in einem Pfad des kombinierten Lichts angeordnet werden.

4. Projektionseinrichtung nach Anspruch 3, wobei der Synchronisationssignalerzeuger (23) eine sich bewegende Position des ersten Farbrads (203) erkennt, um das Synchronisationssignal zu erzeugen.

5. Projektionseinrichtung nach Anspruch 3, wobei die Steuereinheit (24) der ersten Festkörper-Lichtquelle (201) eine erste Energie zuführt, wenn sich das erste Segment in dem Pfad des konvertierten Lichts befindet, der ersten Festkörper-Lichtquelle (201) eine zweite Energie zuführt, wenn sich das zweite Segment in dem Pfad des konvertierten Lichts befindet, und der ersten Festkörper-Lichtquelle (201) eine niedrige Energie zuführt, wenn sich das dritte Segment in dem Pfad des konvertierten Lichts befindet, wobei die niedrige Energie niedriger ist als die erste und die zweite Energie.

6. Projektionseinrichtung nach Anspruch 5, wobei die niedrige Energie die erste Festkörper-Lichtquelle (201) ausschaltet oder die Energie der ersten Festkörper-Lichtquelle (201) anpasst, um sie in einem Bereitschaftsstatus zu halten, wenn sich das dritte Segment in dem Pfad des konvertierten Lichts befindet.

7. Projektionseinrichtung nach Anspruch 3, wobei die Steuereinheit (24) der zweiten Festkörper-Lichtquelle (202) eine dritte Energie zuführt, wenn sich das dritte Segment in dem Pfad des konvertierten Lichts befindet, und der zweiten Festkörper-Lichtquelle (202) eine niedrige Energie zuführt, wenn sich das erste und das zweite Segment in dem Pfad des konvertierten Lichts befinden, wobei die niedrige Energie niedriger ist als die dritte Energie.

8. Projektionseinrichtung nach Anspruch 7, wobei die Steuereinheit (24) die zweite Festkörper-Lichtquelle (202) ausschaltet oder die Energie der zweiten Festkörper-Lichtquelle (202) anpasst, um sie in einem Bereitschaftsstatus zu halten, wenn sich das erste oder das zweite Segment in dem Pfad des konvertierten Lichts befindet.

9. Verfahren zum Steuern einer Projektionseinrichtung, umfassend:
(a) direktes oder indirektes Erzeugen von mindestens zwei Primärfarbenlichtern von unterschiedlichen Farben und Ausgeben dieser Lichter abwechselnd unter Verwendung von mindestens zwei Festkörper-Lichtquellen;
wobei Schritt (a) einschließt:
Verwenden einer ersten Festkörper-Lichtquelle (201) von den mindestens zwei Festkörper-Lichtquellen, um ein Anregungslicht zu erzeugen;
Verwenden einer Wellenlängenkonvertierungsvorrichtung zum Konvertieren des Anregungslichts in ein konvertiertes Licht;
Verwenden eines ersten Antriebsmechanismus (205), um ein erstes Farbrad (203) zum Drehen anzutreiben, wobei das erste Farbrad (203) ein erstes Segment und ein zweites Segment aufweist, sodass das erste und das zweite Segment abwechselnd in einem Pfad des konvertierten Lichts angeordnet werden, wenn sich das erste Farbrad (203) dreht, dann das konvertierte Licht durch das erste Segment gefiltert wird, um ein erstes Primärfarbenlicht zu erzeugen, und durch das zweite Segment gefiltert wird, um ein zweites Primärfarbenlicht zu erzeugen;
Verwenden einer zweiten Festkörper-Lichtquelle (202) von den mindestens zwei Festkörper-Lichtquellen, um ein drittes Primärfarbenlicht zu erzeugen;
Verwenden einer Lichtkombinationsvorrichtung (207), um das erste, das zweite und das dritte Primärfarbenlicht zu dem kombinierten Licht zu kombinieren;
(b) Erzeugen eines Synchronisationssignals unter Verwendung eines Synchronisationssignalerzeugers; und
(c) Verwenden einer Steuereinheit (24), um die Antriebsenergie der mindestens zwei Festkörper-Lichtquellen basierend auf dem Synchronisationssignal auf gepulste Weise zu steuern, sodass sich während mindestens irgendeiner Teilperiode mindestens eine Festkörper-Lichtquellen im Arbeitsstatus befindet und mindestens eine Festkörper-Lichtquelle in einem Bereitschaftsstatus befindet.

10. Verfahren nach Anspruch 9, wobei Schritt (a) weiter einschließt:
Verwenden eines Antriebsmechanismus, um das erste Farbrad (203) anzutreiben, das weiter ein drittes Segment aufweist, sodass das erste, zweite und dritte Segment abwechselnd in einem Pfad des konvertierten Lichts angeordnet werden.

11. Verfahren nach Anspruch 10, wobei Schritt (c) einschließt:
Verwenden der Steuereinheit (24), um der ersten Festkörper-Lichtquelle (201) eine erste Energie zuzuführen, wenn sich das erste Segment in dem Pfad des konvertierten Lichts befindet, der ersten Festkörper-Lichtquelle (201) eine zweite Energie zuzuführen, wenn sich das zweite Segment in dem Pfad des konvertierten Lichts befindet, der ersten Festkörper-Lichtquelle (201) eine niedrige Energie zuzuführen, wenn sich das dritte Segment in dem Pfad des konvertierten Lichts befindet, wobei die niedrige Energie niedriger ist als die erste und die zweite Energie, der zweiten Festkörper-Lichtquelle (202) eine dritte Energie zuzuführen, wenn sich das dritte Segment in dem Pfad des konvertierten Lichts befindet, und der zweiten Festkörper-Lichtquelle (202) eine andere niedrige Energie zuzuführen, wenn sich das erste und das zweite Segment in dem Pfad des konvertierten Lichts befinden, wobei diese andere niedrige Energie niedriger ist als die dritte Energie.

## Revendications

1. Appareil de projection comprenant :
au moins deux sources de lumière à semi-conducteurs (201, 202) pour générer au moins deux faisceaux de lumière directement ou indirectement, les au moins deux faisceaux de lumière présentant des couleurs différentes et étant délivrés en alternance, les au moins deux sources de lumière à semi-conducteurs comprenant une première source de lumière à semi-conducteurs (201) pour générer une lumière d'excitation, une seconde source de lumière à semi-conducteurs (202) pour générer une troisième lumière de couleur primaire
un dispositif de conversion de longueurs d'onde pour convertir la lumière d'excitation en lumière convertie ;
une première roue de couleur (203) disposée pour recevoir la lumière convertie incidente, la première roue de couleur (203) comprenant un premier segment et un deuxième segment;
un premier mécanisme d'entraînement (205) pour entraîner la première roue de couleur (203) en rotation, dans lequel le premier segment et le deuxième segment sont disposés en alternance dans un trajet de la lumière convertie, de sorte que la lumière convertie est filtrée par le premier segment pour générer une première lumière de couleur primaire et est filtrée par le deuxième segment pour générer une deuxième lumière de couleur primaire ;
un dispositif de combinaison de lumière (207) combinant la première, la deuxième et la troisième lumière de couleur primaire en lumière combinée ;
un générateur de signal synchrone (23) pour générer un signal synchrone ; et
un dispositif de commande (24) pour fournir une énergie d'entraînement en mode pulsé à chacune des au moins deux sources de lumière à semi-conducteurs (201, 202) sur la base du signal synchrone,
**caractérisé en ce qu'**au cours d'au moins une sous-période, l'une des au moins deux sources de lumière à semi-conducteurs (201, 202) est dans un état de travail et une autre des au moins deux sources de lumière à semi-conducteurs est maintenue dans un état de réserve.

2. Appareil de projection selon la revendication 1, dans lequel le dispositif de conversion de longueurs d'onde comprend :
une seconde roue de couleur (204) portant un matériau de conversion de longueurs d'onde ; et
un second mécanisme d'entraînement (206) pour entraîner la seconde roue (204) en rotation, dans lequel un point lumineux sur la seconde roue (204) formé par la lumière d'excitation éclaire le matériau de conversion de longueurs d'onde le long d'un trajet prédéterminé et le matériau de conversion de longueurs d'onde convertit la lumière d'excitation en lumière convertie.

3. Appareil de projection selon la revendication 2,
dans lequel la première roue de couleur (203) comprend en outre un troisième segment, les premier, deuxième et troisième segments sont disposés en alternance dans un trajet de la lumière convertie.

4. Appareil de projection selon la revendication 3, dans lequel le générateur de signal synchrone (23) détecte une position de mouvement de la première roue de couleur (203) afin de générer le signal synchrone.

5. Appareil de projection selon la revendication 3, dans lequel le dispositif de commande (24) fournit une première énergie à la première source de lumière à semi-conducteurs (201) lorsque le premier segment est dans le trajet de la lumière convertie, fournit une deuxième énergie à la première source de lumière à semi-conducteurs (201) lorsque le deuxième segment est dans le trajet de la lumière convertie et fournit une faible énergie à la première source de lumière à semi-conducteurs (201) lorsque le troisième segment est dans le trajet de la lumière convertie, la faible énergie étant inférieure à la première et à la deuxième énergie.

6. Appareil de projection selon la revendication 5, dans lequel la faible énergie coupe la première source de lumière à semi-conducteurs (201) ou ajuste l'énergie de la première source de lumière à semi-conducteurs (201) pour la maintenir en état de réserve lorsque le troisième segment est dans le trajet de la lumière convertie.

7. Appareil de projection selon la revendication 3, dans lequel le dispositif de commande (24) fournit une troisième énergie à la seconde source de lumière à semi-conducteurs (202) lorsque le troisième segment est dans le trajet de la lumière convertie, et fournit une faible énergie à la seconde source de lumière à semi-conducteurs (202) lorsque les premier et deuxième segments sont dans le trajet de la lumière convertie, la faible énergie étant inférieure à la troisième énergie.

8. Appareil de projection selon la revendication 7, dans lequel le dispositif de commande (24) coupe la seconde source de lumière à semi-conducteurs (202) ou ajuste l'énergie de la seconde source de lumière à semi-conducteurs (202) pour la maintenir en état de réserve lorsque le premier ou le deuxième segment est dans le trajet de la lumière convertie.

9. Procédé de commande d'un appareil de projection, comprenant les étapes consistant à :
(a) générer directement ou indirectement au moins deux lumières de couleur primaire de différentes couleurs et délivrées en alternance en utilisant au moins deux sources de lumière à semi-conducteurs ;
dans lequel l'étape (a) inclut :
l'utilisation d'une première source de lumière à semi-conducteurs (201) des au moins deux sources de lumière à semi-conducteurs pour générer une lumière d'excitation ;
l'utilisation d'un dispositif de conversion de longueurs d'onde pour convertir la lumière d'excitation en lumière convertie ;
l'utilisation d'un premier mécanisme d'entraînement (205) pour entraîner une première roue de couleur (203) en rotation, la première roue de couleur (203) présentant un premier et un deuxième segment, de sorte que le premier et le deuxième segment sont disposés en alternance dans un trajet de la lumière convertie lorsque la première roue de couleur (203) tourne, puis la lumière convertie est filtrée par le premier segment pour générer une première lumière de couleur primaire et est filtrée par le deuxième segment pour générer une deuxième lumière de couleur primaire ;
l'utilisation d'une seconde source de lumière à semi-conducteurs (202) des au moins deux sources de lumière à semi-conducteurs pour générer une troisième lumière de couleur primaire ;
l'utilisation d'un dispositif de combinaison de lumière (207) pour les première, deuxième et troisième lumières de couleur primaire en lumière combinée ;
(b) générer un signal synchrone en utilisant un détecteur de signal synchrone ; et
(c) utiliser un dispositif de commande (24) pour commander l'énergie d'entraînement en mode pulsé des au moins deux sources de lumière à semi-conducteurs sur la base du signal synchrone, de sorte qu'au cours d'au moins une certaine sous-période, au moins une source de lumière à semi-conducteurs est dans un état de travail et qu'au moins une source de lumière à semi-conducteurs est dans un état de réserve.

10. Procédé selon la revendication 9, dans lequel l'étape (a) inclut en outre :
l'utilisation d'un mécanisme d'entraînement pour entraîner la première roue de couleur (203) présentant en outre un troisième segment, de sorte que les premier, deuxième et troisième segments sont disposés en alternance dans un trajet de la lumière convertie.

11. Procédé selon la revendication 10, dans lequel l'étape (c) inclut :
l'utilisation du dispositif de commande (24) pour fournir une première énergie à la première source de lumière à semi-conducteurs (201) lorsque le premier segment est dans le trajet de la lumière convertie, fournir une deuxième énergie à la première source de lumière à semi-conducteurs (201) lorsque le deuxième segment est dans le trajet de la lumière convertie, fournir une faible énergie à la première source de lumière à semi-conducteurs (201) lorsque le troisième segment est dans le trajet de la lumière convertie, la faible énergie étant inférieure à la première et à la deuxième énergie, fournir une troisième énergie à la seconde source de lumière à semi-conducteurs (202) lorsque le troisième segment est dans le trajet de la lumière convertie, et fournir une autre faible énergie à la seconde source de lumière à semi-conducteurs (202) lorsque le premier et le deuxième segment sont dans le trajet de la lumière convertie, ladite une autre faible énergie étant inférieure à la troisième énergie.
